# EUROPEAN PATENT APPLICATION

(11) **EP 4 197 764 A1**
(43) Date of publication of application: **21.06.2023**
(21) Application number: 21306813.3
(22) Date of filing: 16.12.2021
(51) Int. Cl.: B29D 11/00

(54) **METHOD FOR ENCAPSULATING A MICROSTRUCTURED LENS BY COATING TRANSFER**

(71) Applicant: Essilor International, 94220 Charenton-Le-Pont (FR)
(72) Inventor: JALLOULI, Aref, Shrewsbury, MA 01545 (US); CHIU, Hao-Wen, Holden, MA 01520 (US)
(74) Representative: Jacobacci Coralis Harle

(57) **Abstract**

A method of forming an optical lens includes providing a lens having microstructures on a surface thereof and an adhesive layer coated thereon; pressing a coating stack, via a carrier layer attached to a first surface of the coating stack by a release coating, against the adhesive layer, a second surface of the coating stack being in contact with the adhesive layer; and curing the adhesive layer and removing the carrier layer from the first surface of the coating stack via the release coating, wherein a thickness of the adhesive layer is greater than a depth of the microstructures on the surface of the lens.

## Description

### FIELD

The present disclosure relates to a method applying a hard multi-coat on a lens having surface microstructures via a carrier layer.

### BACKGROUND

The background description provided herein is for the purpose of generally presenting the context of the disclosure. Work of the presently named inventors, to the extent the work is described in this background section, as well as aspects of the description that may not otherwise qualify as prior art at the time of filing, are neither expressly nor impliedly admitted as prior art against the present disclosure.

Coatings of microstructured lenses can result in a deviation from the original microlens design, which may require several concept loops to reach a design compensation for each coating. This, in turn, may require longer development times and higher costs. In addition, some microstructured lenses, such as Pi-Fresnel, may not be coated by common methods such as dip or spin coating due to loss of optical design.

Aspects of the disclosure may address some of the above-described shortcomings in the art, particularly with the solutions set forth in the claims.

### SUMMARY

The present disclosure relates to a method of forming an ophthalmic lens, including: providing a lens having microstructures on a surface thereof and an adhesive layer coated thereon; pressing a coating stack, via a carrier layer attached to a first surface of the coating stack by a release coating, against the adhesive layer, a second surface of the coating stack being in contact with the adhesive layer; and curing the adhesive layer and removing the carrier layer from the first surface of the coating stack via the release coating, wherein a thickness of the adhesive layer is greater than a depth of the microstructures on the surface of the lens. The present disclosure relates to a method as disclosed in claim 1. Advantageous aspects of the method according to the present disclosure are disclosed in claims 2 to 14. The present disclosure additionally relates to an optical element obtained according to the method of the invention and in which the optical element is an ophthalmic lens.

Note that this summary section does not specify every feature and/or incrementally novel aspect of the present disclosure or claimed invention. Instead, this summary only provides a preliminary discussion of different embodiments and corresponding points of novelty. For additional details and/or possible perspectives of the embodiments, the reader is directed to the Detailed Description section and corresponding figures of the present disclosure as further discussed below.

### BRIEF DESCRIPTION OF THE DRAWINGS

Various embodiments of this disclosure that are proposed as examples will be described in detail with reference to the following figures, wherein:
FIG. 1A is a schematic of an injection molding process to form a lens, useful within the scope of the present disclosure.
FIG. 1B is an exemplary cross-sectional schematic of a casting process, useful within the scope of the present disclosure.
FIG. 2 is schematic of a HMC transfer method, useful within the scope of the present disclosure.
FIG. 3 is an exemplary flow chart for a method of forming an ophthalmic lens, useful within the scope of the present disclosure.

### DETAILED DESCRIPTION

The following disclosure provides many different variations, or examples, for implementing different features of the provided subject matter. Specific examples of components and arrangements are described below to simplify the present disclosure. These are, of course, merely examples and are not intended to be limiting nor inoperable together in any permutation. Unless indicated otherwise, the features and embodiments described herein are operable together in any permutation. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. Further, spatially relative terms, such as "top," "bottom," "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. Inventive apparatuses may be otherwise oriented (rotated 90 degrees or at other orientations) and the spatially relative descriptors used herein may likewise be interpreted accordingly.

The order of discussion of the different steps as described herein has been presented for clarity sake. In general, these steps can be performed in any suitable order. Additionally, although each of the different features, techniques, configurations, etc. herein may be discussed in different places of this disclosure, it is intended that each of the concepts can be executed independently of each other or in combination with each other. Accordingly, the present disclosure can be embodied and viewed in many different ways.

As previously mentioned, there may be a need to provide a microstructured lens that can be coated, such as with a hard multi-coat (HMC), without affecting the underlying microstructures formed thereon. To that end, a process leveraging a carrier layer can be used.

Described herein, a HMC can be applied on the microstructured lens surface via a carrier wafer or coating. In particular, the coating carrier can be transferred and adhered onto the target lens surface with an adhesive or bonding fluid that encapsulates the surface microstructures formed thereon.

Described herein, the transfer method includes first casting or molding (e.g., injection molding) a microstructured semi-finished or finished lens and depositing an adhesive on the surface of the lens. Then, a carrier layer with the HMC stack can be pressed against this surface and the adhesive can be cured before removing the carrier. The transfer method allows for the HMC stack to be transferred and adhered to the surface of the lens without imparting undesirable deformation or damage to the surface of the lens.

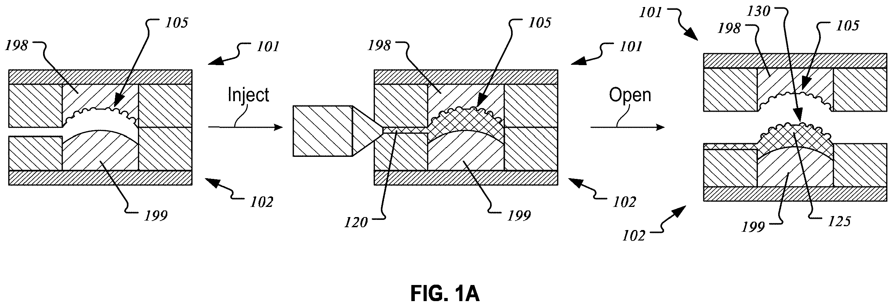

FIG. 1A is a schematic of an injection molding process to form a lens 125, useful within the scope of the present disclosure. In a useful scope, a mold device can include a first mold side 101 and a second mold side 102, a first mold insert 198 disposed on the first mold side 101, and a second mold insert 199 disposed on the second mold side 102. The first mold side 101 and the second mold side 102 can each include a hollow portion, wherein the first mold insert 198 and the second mold insert 199 can be removeably disposed therein. The first mold insert 198 can include a plurality of inverted microstructures 105 formed on a surface of the first mold insert 198. The plurality of inverted microstructures 105 can be a complementary shape to microstructures 130 on a resulting molded lens 125 to form the microstructures 130 during molding. The second mold insert 199 can have a smooth surface or similarly include a microstructured surface.

The first mold side 101 with the first mold insert 198 and the second mold side 102 with the second mold insert 199 can be configured to move towards one another to form a cavity or away from one another to open the mold device.

The cavity can be connected to a hollow line formed by the coupling of the first and second mold sides 101, 102. The line can be configured to receive a polymer melt 120, for example, via a screw feeder or similar polymer injector device. The polymer injector can be attached to the mold device and configured to inject the polymer melt 120 into the cavity when the first mold side 101 is coupled with the second mold side 102 to form a lens 125 from the polymer melt 120 with the microstructures 130 based on the plurality of inverted microstructures 105 and a surface of the second mold insert 199 facing the cavity. The mold device can stay closed for a first predetermined length of time until the lens 125 has formed.

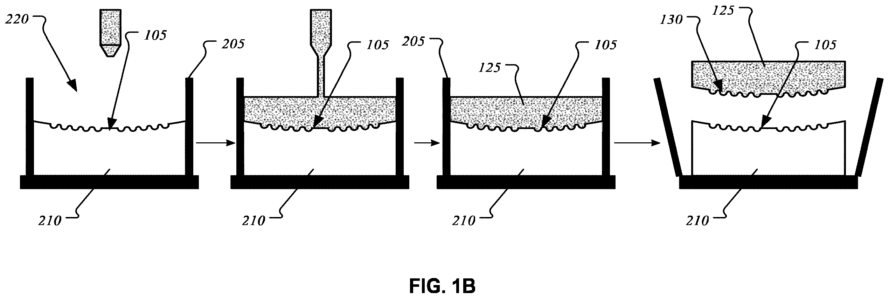

FIG. 1B shows an exemplary cross-sectional schematic of a casting process, useful within the scope of the present disclosure. In a useful scope, referring to the first step of FIG. 1B, a gasket 205, such as a tape, can be applied around a master mold 210 to form a well 220. For example, the master mold 210 is a mold insert and includes the plurality of inverted microstructures 105. The plurality of inverted microstructures 105 can be refractive, diffractive, or discontinuous over a portion or an entire surface of the insert. In a second step of FIG. 1B, the well 220 can be filled with a resin. In a third step of FIG. 1B, the master mold 210 and the resin filled in the well 220 can be cured in an oven to form the lens 125. The resin can copy an inversion of the plurality of inverted microstructures 105 on the surface of the master mold 210. In a fourth step of FIG. 1B, the gasket 205 can be removed and the lens 125 can be released from the master mold 210, the lens 125 replicating the surface of the master mold 210 to form the microstructures 130.

In a useful scope, the lens 125 can be a thermoplastic or a thermosetting material. Examples of thermoset lens materials include polyurethane, allyl diglycol carbonate, polythiourethane, episulfur polymers, epoxy, poly(meth)acrylates, polythiomethacrylates, or combinations thereof. Examples of thermoplastic lens materials include polycarbonate (referring to homopolycarbonates, copolycarbonates, and block copolycarbonates - polycarbonates can be aromatic or non-aromatic), isosorbide polycarbonate, polyacrylate, (meth)acrylic (co)polymers (especially methyl PMMA), polyvinylbutyral (PVB), thermoplastic polyurethanes (TPU), thermoplastic copolymers of ethylene and vinyl acetate, polyesters such as polyethylene terephthalate (PET) or polybutylene terephthalate (PBT), copolyester, copolymers of polycarbonates and polyesters, copolymers of cycloolefins such as copolymers of ethylene and norbornene or ethylene and cyclopentadiene, and combinations thereof, polystyrene, polyamide, polysulfone, polyphenylsulfone, polyetherimide, polypentene, polyolefin, ionomer, ethylene methacrylic acid, cyclic olefin copolymer, acrylonitrile, styrene maleic anhydride, a copolymer thereof, or a derivative or mixture thereof.

The plurality of inverted microstructures 105 can be used to mold, for example, refractive micro-structures or diffractive micro/nano-structures. The plurality of inverted microstructures 105 can be an inversion of a desired final pattern be formed on the resulting lens after molding. The plurality of inverted microstructures 105 can include microlenses or microlenslets or any other type of structure or elements having physical Z deformation/height or depth between 0.1 micrometer (µm) to 50 (µm and width/length between 0.5 (µm to 2.0 mm. These structures preferably have periodical or pseudo periodical layout but may also have randomized positions. The preferred layout for microstructures is a grid with constant grid step, honeycomb layout, multiple concentric rings, contiguous e.g., no space in between microstructures. These structures may provide optical wave front modification in intensity, curvature, or light deviation, where the intensity of wave front is configured such that structures may be absorptive and may locally absorb wave front intensity with a range from 0% to 100%, where the curvature is configured such that the structure may locally modify wave front curvature with a range of +/- 20 Diopters, and light deviation is configured such that the structure may locally scatter light with angle ranging from +/- 1° to +/- 30°. A distance between structures may range from 0 (contiguous) to 3 times the structure in "X" and/or "Y" size (separate microstructures).

In the sense of the disclosure, two optical elements located on a surface of a lens substrate are contiguous if there is a path supported by said surface that links the two optical elements and if along said path one does not reach the basis surface on which the optical elements are located. According to another scope, the optical elements are contiguous over a pupil when the optical lens over said pupil comprises no refraction area having a refractive power based on a prescription for said eye of the wearer or a refraction area having a refractive power based on a prescription for said eye of the wearer consisting in a plurality of respectively independent island-shaped areas. According to another scope, the two optical elements are contiguous if there is a path linking the two optical elements along part of said path one may not measure the refractive power based on a prescription for the eye of the person. According to another scope, optical elements being contiguous can also be defined in a surfacic or surface-oriented manner. A measured surface being between 3 mm² and 10 mm² is considered. The measured surface comprises a density of "W" optical elements per mm². If in said measured surface, at least 95% of the surface, preferably 98%, has an optical power different from the surface onto which the optical elements are located, said optical elements are considered to be contiguous.

Furthermore, microstructures which form a microstructured main surface of an ophthalmic lens substrate may include lenslets. Lenslets may form bumps and/or cavities (i.e., raised or recessed lenslet structures) at the main surface they are arranged onto. The outline of the lenslets may be round or polygonal, for example hexagonal. More particularly, lenslets may be microlenses. A microlens may be spherical, toric, cylindrical, prismatic, or aspherical shapes or any combination to make a multi-element shape. A microlens may have a single focus point, or cylindrical power, or multi-focal power, or non-focusing point. Microlenses can be used to prevent progression of myopia or hyperopia. In that case, the base lens substrate comprises a base lens providing an optical power for correcting myopia or hyperopia, and the microlenses may provide respectively an optical power greater than the optical power of the base lens if the wearer has myopia, or an optical power lower than the optical power of the base lens if the wearer has hyperopia. Lenslets may also be Fresnel structures, diffractive structures such as microlenses defining each a Fresnel structure, permanent technical bumps (raised structures), or phase-shifting elements. It can also be a refractive optical element such as microprisms and a light-diffusing optical element such as small protuberances or cavities, or any type of element generating roughness on the substrate. It can also be π-Fresnel lenslets as described in US2021109379, i.e., Fresnel lenslets which phase function has π phase jumps at the nominal wavelength, as opposition to unifocal Fresnel lenses which phase jumps are multiple values of 2π. Such lenslets include structures that have a discontinuous shape. In other words, the shape of such structures may be described by an altitude function, in terms of distance from the base level of the main surface of the optical lens the lenslet belongs to, which exhibits a discontinuity, or which derivative exhibits a discontinuity. In a useful scope, the microstructure can be a branding mark, holographic mark, metasurface, or the like.

Lenslets may have a contour shape being inscribable in a circle having a diameter greater than or equal to 0.5 micrometers (µm) and smaller than or equal to 2.0 millimeters (mm). Lenslets may have a height, measured in a direction perpendicular to the main surface they are arranged onto, that is greater than or equal to 0.1 (µm and less than or equal to 50 µm. Lenslets may have periodical or pseudo periodical layout but may also have randomized positions. One layout for lenslets is a grid with constant grid step, honeycomb layout, multiple concentric rings, contiguous e.g., no space in between microstructures. These structures may provide optical wave front modification in intensity, curvature, or light deviation, where the intensity of wave front is configured such that structures may be absorptive and may locally absorb wave front intensity with a range from 0% to 100%, where the curvature is configured such that the structure may locally modify wave front curvature with a range of +/- 20, 500, or 1000 Diopters, and light deviation is configured such that the structure may locally scatter light with angle ranging from +/- 1° to +/- 30°. A distance between structures may range from 0 (contiguous) to 3 times the structure (separate microstructures).

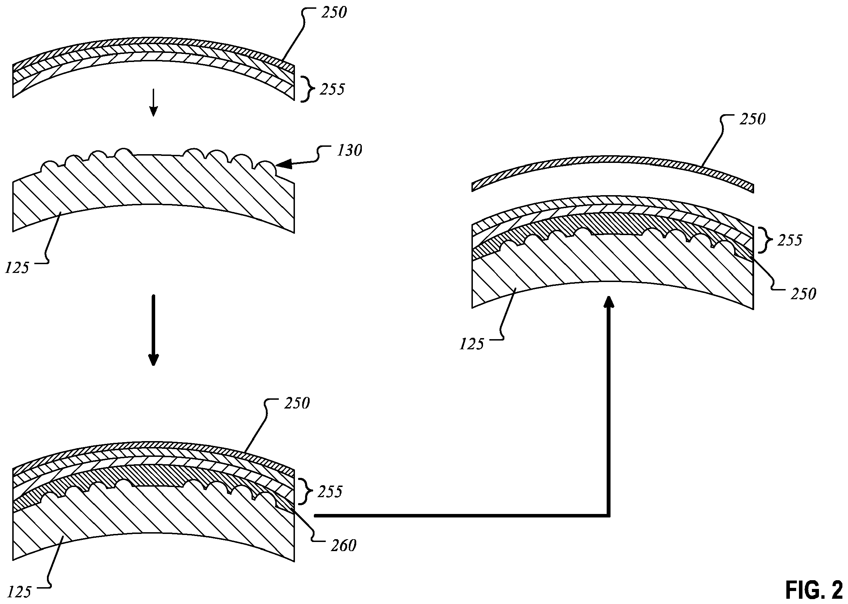

FIG. 2 is a schematic of a HMC transfer method, useful within the scope of the present disclosure. In a useful scope, a carrier layer 250 can be attached to a coating stack or an HMC stack 255 having at least one layer. A material of the carrier layer 250 can be, for example, polycarbonate. The carrier layer 250 can be attached to the HMC stack 255 by a release coating to facilitate release of the carrier layer 250 from the HMC stack 255.

In a useful scope, the HMC stack 255 can be disposed on a concave side of the carrier layer 250 (as shown) and layers in the HMC stack 255 can be arranged in a reverse order as compared to a standard HMC stack. That is, the carrier layer 250 can be attached to a first surface of the HMC stack 255, wherein the first surface is convex. A second surface of the HMC stack 255 can be concave and disposed opposite and farthest from the carrier layer 250. The HMC stack 255 can include a hydrophobic top coat (most proximal to the carrier layer 250), an anti-reflective coating (which can comprise a stack of sub-layers deposited in reverse of the normal order compared to coating directly onto the lens 125), a hardcoating layer, and a latex primer farthest from the carrier layer 250. The hydrophobic top coat and the anti-reflective coating can be deposited via vacuum deposition. The hardcoat and the latex primer can be spin coated and cured. Again, the lens 125 can include the microstructures 130 on a convex surface of the lens 125 (as shown).

In a useful scope, the carrier layer 250 can be attached to the second (concave) surface of the HMC stack 255. In such an arrangement, the first (convex) surface of the HMC stack 255 is disposed opposite and farthest from the carrier layer 250. The layers in the HMC stack 255 can be arranged in an order opposite to when the carrier layer 250 is attached to the first surface of the HMC stack 255. That is, the HMC stack 255 can include a hydrophobic bottom coat (most proximal to the carrier layer 250), an anti-reflective coating (which can comprise a stack of sub-layers deposited in the normal order compared to coating directly onto the lens 125), a hardcoating layer, and a latex primer farthest from the carrier layer 250.

In a useful scope, an adhesive 260 (or any fluid for attachment) can be applied to the surface of the lens having the microstructures 130. The adhesive 260 can include light filters such as photochromic dyes or other light filters, which would result in a photochromic microstructured lens 125. A predetermined difference or delta in refractive index between the adhesive 260 and the lens 125 material, and a predetermined thickness of the adhesive 260 can be adjusted to preserve the optical function of the microlenses (the microstructures 130). For example, a refractive index of the adhesive 260 can be less than a refractive index of the lens 125 or a refractive index of the adhesive 260 can be greater than a refractive index of the lens 125. For example, a depth of the microstructures on the surface of the lens is 0.1 µm to 10 µm and a thickness of the adhesive layer is 0.2 µm to 50 µm. For example, a depth of 1 µm can be used for a concentric microlens design. For example, a depth of 5 to 6 µm can be used for a contiguous bifocal microlens design.

The carrier layer 250 with the attached HMC stack 255 can be brought into contact with the adhesive 260 on the lens 125 such that the HMC stack 255 is proximal to the adhesive 260. As shown, the concave second surface of the HMC stack 255 is brought into contact with the adhesive 260 applied to the convex surface of the lens 125. A volume of the applied adhesive 260 can be based on dimensions of the microstructures 130, wherein the adhesive 260 volume sufficiently fills in any depressions or valleys of the microstructures 130. Further, a level of the adhesive 260 can exceed a highest point (a maximum height) of the microstructures 130 when the HMC stack 255 contacts the adhesive 260. The adhesive 260 can be cured, for example via high temperature, UV-Vis, etc., before removing the carrier layer 250. The transfer method allows for the HMC stack 255 to be transferred and adhered to the surface of the lens 125 without causing damage to or altering the microstructures 130 on the surface of the lens 125.

In a useful scope, the HMC stack 255 includes anti-reflective layers.

In a useful scope, the adhesive 260 can be cured via UV-Visible actinic radiation to bond the HMC stack 255 to the lens 125 before the carrier layer 250 is removed from the HMC stack 255 by breaking the bond of the release coating.

In a useful scope, the adhesive 260 can be cured via high temperature to bond the HMC stack 255 to the lens 125 before the carrier layer 250 is removed from the HMC stack 255 by breaking the bond of the release coating.

In a useful scope, the HMC stack 255 includes a latex layer disposed as the last layer in the HMC stack 255 opposite and furthest from the carrier layer 250. The adhesive 260 can be water or a water-based activating liquid. The HMC stack 255 can be brought into contact with the water or water-based activating liquid on the surface of the lens 125, wherein the latex layer contacts the water or water-based activating liquid. Upon contacting the water or water-based activating liquid, the latex layer can expand. Notably, the expansion of the latex layer can surround and encapsulate the microstructures 130 to form the bond between the HMC stack 255 and the lens 125. The water can also be heated to facilitate uptake into the latex layer.

### EXAMPLES

Carrier layer preparation: a 0.5 mm thick piano polycarbonate (PC) carrier layer, having a 2.45 base was fabricated by injection molding. The PC carrier layer was coated by spin coating on its concave side with a protective release coating (see composition in US 7,476,415). A hydrophobic top coat and an anti-reflective coating (including a stack of sub-layers deposited in reverse of the normal order) were deposited by vacuum. A hardcoating solution and a latex primer solution were then deposited by spin coating, and then cured.

Lens preparation: a -2D lens, having a microstructured front surface and 3.25 base front curve was washed, dried, and corona treated on the convex side.

Example 1 - A premeasured drop of a UV curable adhesive (for example, OP21 from Dymax Inc.) was placed on the convex side of the lens, and the reverse HMC stack was applied on the adhesive. Pressure was applied to the HMC stack to match a curvature of the HMC stack to a curvature of the lens convex surface. This resulted in the spread of the adhesive between the surface of the lens and the latex primer coating of the carrier layer. The lens/adhesive/HMC stack/carrier layer assembly was placed in a UV curing device to allow the polymerization of the adhesive. After UV curing completion, the pressure was released and the carrier layer was removed. The HMC stack was transferred to the convex surface of the lens via the carrier layer in a way that the microstructures were fully encapsulated by the adhesive and the microstructures were not damaged. The adhesive thickness was higher (or taller) than the depth of the microstructures in order to ensure a full encapsulation. For example, if the microstructures depth is 1 micron, the adhesive thickness can be 1.5 microns or greater.

Example 2 - Multiple drops of deionized water were deposited on the convex side of the lens, and the HMC stack including a latex primer layer was applied on (brought into contact with) the water. Pressure was applied to the HMC stack to match a curvature of the HMC stack to a curvature of the lens convex surface. After heating the assembly under pressure (12 PSI, 30 minutes, 110°C), the assembly was cooled, the pressure was released, and the carrier layer was removed. The HMC stack was transferred to the convex surface of the lens, in a way that the microstructures were fully encapsulated by the latex primer layer and the microstructures were not damaged. The latex primer layer was higher (or taller) than the depth of the microstructures in order to ensure a full encapsulation. For example, if the microstructures depth is 1 micron, the latex primer layer thickness can be 1.5 microns or greater.

Notably, Benefits of the disclosed method include: i) the ability to make Transitions^{®} Stellest^{™} lenses, and other photochromic lenses with different µ-structures; ii) the ability to coat new myopia control lens designs (such as contiguous µ-lens and Pi-Fresnel) that could not be coated by standard methods such as dip or spin due to loss of optical design; iii) the ability to include light filters in the adhesive or the latex layers, such as blue cut; and iv) the ability to provide a lens surface with a HMC, thus eliminating the need for an additional coating.

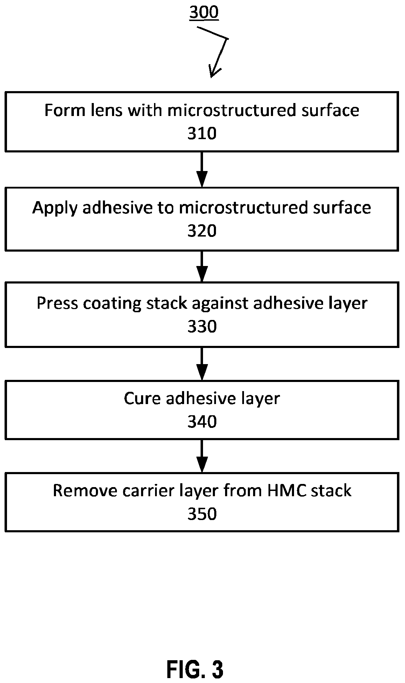

FIG. 3 is an exemplary flow chart for a method 300 of forming an optical lens, useful within the scope of the present disclosure. In step 310, the lens 125 can be formed having the microstructures 130 formed on the surface of the lens 125, such as the convex surface. In step 320, the adhesive 260 can be applied to the microstructures on the surface of the lens 125. In step 330, the HMC stack 255 can be pressed, via the carrier layer 250, against the adhesive layer 260, wherein the layer opposite and farthest from the carrier layer 250 in the HMC stack 255 contacts the adhesive layer 260. In step 340, adhesive layer 260 can be cured. In step 350, the carrier layer can be removed from the HMC stack 255. An optical element can be produced, wherein the optical element is an ophthalmic lens, in particular a spectacle lens.

In the preceding description, specific details have been set forth, such as a particular geometry of a processing system and descriptions of various components and processes used therein. It should be understood, however, that techniques herein may be practiced in other embodiments that depart from these specific details, and that such details are for purposes of explanation and not limitation. Embodiments disclosed herein have been described with reference to the accompanying drawings. Similarly, for purposes of explanation, specific numbers, materials, and configurations have been set forth in order to provide a thorough understanding. Nevertheless, embodiments may be practiced without such specific details. Components having substantially the same functional constructions are denoted by like reference characters, and thus any redundant descriptions may be omitted.

Various techniques have been described as multiple discrete operations to assist in understanding the various embodiments. The order of description should not be construed as to imply that these operations are necessarily order dependent. Indeed, these operations need not be performed in the order of presentation. Operations described may be performed in a different order than specifically described unless expressly indicated otherwise. Various additional operations may be performed and/or described operations may be omitted.

Those skilled in the art will also understand that there can be many variations made to the operations of the techniques explained above while still achieving the same objectives of the disclosure. Such variations are intended to be covered by the scope of this disclosure. As such, the foregoing descriptions of embodiments are not intended to be limiting. Rather, any limitations to embodiments are presented in the following claims.

Embodiments of the present disclosure may also be as set forth in the following parentheticals.
(1) A method of forming an optical lens, comprising providing a lens (125) having microstructures (130) on a surface thereof and an adhesive layer (260) coated thereon; pressing a coating stack (255), via a carrier layer (250) attached to a first surface of the coating stack (255) by a release coating, against the adhesive layer (260), a second surface of the coating stack (255) being in contact with the adhesive layer (260); and curing the adhesive layer (260) and removing the carrier layer (250) from the first surface of the coating stack (255) via the release coating, wherein a thickness of the adhesive layer (260) is greater than a depth of the microstructures (130) on the surface of the lens (125).
(2) The method of (1), wherein the coating stack (255) is a hard multi-coat stack.
(3) The method of either (1) or (2), wherein the adhesive layer (260) is UV-visible radiation sensitive and the adhesive layer (260) is cured with UV-visible actinic radiation.
(4) The method of any one of (1) to (3), wherein adhesive is temperature sensitive and the adhesive layer (260) is cured at high temperature.
(5) The method of any one of (1) to (4), wherein the adhesive layer (260) is water and the coating stack (255) includes a latex layer disposed at the second surface.
(6) The method of (5), wherein the adhesive layer (260) is cured by pressing the coating stack (255) against the adhesive layer (260) for a predetermined length of time, the predetermined length of time being determined by a length of time needed for the latex layer to absorb the water and for the water to evaporate.
(7) The method of (6), wherein curing the adhesive layer (260) further comprises heating the water to a predetermined temperature to increase water uptake into the latex layer and to expedite evaporation of water.
(8) The method of any one of (1) to (7), wherein the adhesive layer (260) includes a photochromic dye configured to absorb a predetermined wavelength range of electromagnetic radiation.
(9) The method of any one of (1) to (8), wherein a refractive index of the adhesive layer (260) is different from a refractive index of the lens (125).
(10) The method of any one of (1) to (9), further comprising forming the coating stack (255) and the carrier layer (250) by spin coating the release coating onto a surface of the carrier layer (250), the surface of the carrier layer (250) being concave.
(11) The method of (10), further comprising forming the coating stack (255) and the carrier layer (250) by vacuum depositing a hydrophobic topcoat onto the release coating, vacuum depositing an anti-reflective coating onto the hydrophobic topcoat, spin coating a hardcoat solution onto the anti-reflective coating, spin coating a latex primer solution onto the hardcoat solution and curing the hardcoat solution and the latex primer solution.
(12) The method of any one of (1) to (11), further comprising forming the coating stack (255) and the carrier layer (250) by spin coating the release coating onto a surface of the carrier layer (250), the surface of the carrier layer (250) being convex.
(13) The method of any one of (1) to (12), wherein providing the lens (125) with the surface further comprises applying a corona treatment to the surface before applying the adhesive layer (260) to the surface.
(14) The method of any one of (1) to (13), wherein a depth of the microstructures (130) on the surface of the lens (125) is 0.1 µm to 10 µm and a thickness of the adhesive layer (260) is 0.2 µm to 50 µm.
(15) An optical element obtained according to the method of any one of (1) to (14), wherein the optical element is an ophthalmic lens.
(16) The method of any one of (1) to (15), wherein a material of the carrier layer (250) is polycarbonate.
(17) The method of any one of (1) to (16), wherein the coating stack (255) is pressed against the adhesive layer (260) with a force of 12 PSI for at least 30 minutes at a temperature of at least 110°C.
(18) The method of any one of (1) to (17), wherein a material of the lens (125) can be polyurethane, allyl diglycol carbonate, polythiourethane, episulfur polymers, epoxy, poly(meth)acrylates, polythiomethacrylates, or combinations thereof.
(19) The method of any one of (1) to (17), wherein a material of the lens (125) can be polycarbonate, isosorbide polycarbonate, polyacrylate, (meth)acrylic (co)polymers, methyl PMMA, polyvinylbutyral (PVB), thermoplastic polyurethanes (TPU), thermoplastic copolymers of ethylene, thermoplastic copolymers of vinyl acetate, polyester, polyethylene terephthalate (PET), polybutylene terephthalate (PBT), copolyester, copolymers of polycarbonates, copolymers of polyesters, copolymers of cycloolefins, copolymers of ethylene and norbornene, copolymers of ethylene and cyclopentadiene, polystyrene, polyamide, polysulfone, polyphenylsulfone, polyetherimide, polypentene, polyolefin, ionomer, ethylene methacrylic acid, cyclic olefin copolymer, acrylonitrile, styrene maleic anhydride, a copolymer thereof, or combinations thereof.

## Claims

1. A method of forming an optical lens, comprising:
providing a lens having microstructures on a surface thereof and an adhesive layer coated thereon;
pressing a coating stack, via a carrier layer attached to a first surface of the coating stack by a release coating, against the adhesive layer, a second surface of the coating stack being in contact with the adhesive layer; and
curing the adhesive layer and removing the carrier layer from the first surface of the coating stack via the release coating, wherein
a thickness of the adhesive layer is greater than a depth of the microstructures on the surface of the lens.

2. The method of claim 1, wherein the coating stack is a hard multi-coat stack.

3. The method of claim 1, wherein the adhesive layer is UV-visible radiation sensitive and the adhesive layer is cured with UV-visible actinic radiation.

4. The method of claim 1, wherein adhesive is temperature sensitive and the adhesive layer is cured at high temperature.

5. The method of claim 1, wherein the adhesive layer is water and the coating stack includes a latex layer disposed at the second surface.

6. The method of claim 5, wherein the adhesive layer is cured by pressing the coating stack against the adhesive layer for a predetermined length of time, the predetermined length of time being determined by a length of time needed for the latex layer to absorb the water and for the water to evaporate.

7. The method of claim 6, wherein curing the adhesive layer further comprises heating the water to a predetermined temperature to increase water uptake into the latex layer and to expedite evaporation of water.

8. The method of claim 1, wherein the adhesive layer includes a photochromic dye configured to absorb a predetermined wavelength range of electromagnetic radiation.

9. The method of claim 1, wherein a refractive index of the adhesive layer is different from a refractive index of the lens.

10. The method of claim 1, further comprising forming the coating stack and the carrier layer by spin coating the release coating onto a surface of the carrier layer, the surface of the carrier layer being concave.

11. The method of claim 10, further comprising forming the coating stack and the carrier layer by vacuum depositing a hydrophobic topcoat onto the release coating, vacuum depositing an anti-reflective coating onto the hydrophobic topcoat, spin coating a hardcoat solution onto the anti-reflective coating, spin coating a latex primer solution onto the hardcoat solution and curing the hardcoat solution and the latex primer solution.

12. The method of claim 1, further comprising forming the coating stack and the carrier layer by spin coating the release coating onto a surface of the carrier layer, the surface of the carrier layer being convex.

13. The method of claim 1, wherein providing the lens with the surface further comprises applying a corona treatment to the surface before applying the adhesive layer to the surface.

14. The method of claim 1, wherein a depth of the microstructures on the surface of the lens is 0.1 micrometer to 10 micrometers and a thickness of the adhesive layer is 0.2 micrometer to 50 micrometers .

15. An optical element obtained according to the method of any of the preceding claims 1 to 14, wherein the optical element is an ophthalmic lens.
